# EUROPÄISCHE PATENTANMELDUNG

(11) **EP 1 900 598 A1**
(43) Veröffentlichungstag der Anmeldung: **19.03.2008**
(21) Anmeldenummer: 06120695.9
(22) Anmeldetag: 14.09.2006
(51) Int. Cl.: B62B 7/08, B62B 7/06, B62B 9/12

(54) **Faltbarer Kinderwagen mit einer Verlängerung der Rückenlehne, dazugehöriges Verfahren und Verwendung**

(71) Anmelder: Haeggberg, Christian, 9602 Bazenheid (CH)
(72) Erfinder: Haeggberg, Christian, 9602, Bazenheid (CH)
(74) Vertreter: Hepp, Dieter

(57) **Zusammenfassung**

Die Erfindung betrifft einen faltbaren Kinderwagen (1) mit einer Rückenlehne (2), wobei die Rückenlehne in mindestens einer der Betriebspositionen im Vergleich zur Lagerposition verlängert ist, insbesondere durch Anbringen eines Ergänzungsstücks (3).

## Beschreibung

Die Erfindung betrifft einen Kinderwagen, ein Verfahren zur Inbetriebnahme eines Kinderwagens sowie die Verwendung eines Ergänzungsstücks zur Verlängerung der Rückenlehne eines Kinderwagens gemäss den Oberbegriffen der unabhängigen Patentansprüche.

Es ist eine Vielzahl von Kinderwagen bekannt, welche bei Nichtbenutzung zur Verringerung des benötigten Platzbedarfs z.B. zusammenlegbar oder zusammenklappbar sind. Ein derartiger Kinderwagen ist bspw. in EP 1 632 416 beschrieben.

Zwar sind derartige Kinderwagen heute hinsichtlich des Platzbedarfs bei Nichtbenutzung weitgehend optimiert, jedoch hat diese Miniaturisierung zu Nachteilen bei der Ausgestaltung der Betriebsposition geführt: Die Betriebsposition wird von Kindern oftmals nicht als angenehm empfunden. Auch unter Sicherheitsaspekten bleiben bekannte zusammenklappbare bzw. zusammenlegbare Kinderwagen oftmals hinter fest-installierten Kinderwagen zurück.

Es ist daher eine Aufgabe der Erfindung, die Nachteile des Bekannten zu vermeiden, insbesondere also einen Kinderwagen bereitzustellen, welcher über eine Betriebsposition und eine Lagerposition verfügt, und bei welchem sowohl die Sicherheit als auch der Sitzkomfort des Kindes verbessert ist.

Diese Aufgabe wird gelöst durch einen Kinderwagen, ein Verfahren zur Inbetriebnahme eines Kinderwagens sowie die Verwendung eines Ergänzungsstücks zur Verlängerung der Rückenlehne eines Kinderwagens gemäss den unabhängigen Patentansprüchen.

Der erfindungsgemässe Kinderwagen weist einen Mechanismus zum Überführen von einer Lagerposition in mindestens eine Betriebsposition auf. Darüber hinaus verfügt der Kinderwagen über mindestens eine Rückenlehne; in besonderen Ausführungsformen können auch mehrere Rückenlehnen vorgesehen sein, bspw. bei Zwillings-Kinderwagen. Die Rückenlehne ist beim erfindungsgemässen Kinderwagen in mindestens einer der Betriebspositionen im Vergleich zur Lagerposition verlängert.

Unter der Betriebsposition wird hier und im folgenden diejenige Position des Kinderwagens verstanden, in welcher ein Kind in dem Kinderwagen transportiert wird. Selbstverständlich kann der Kinderwagen auch über mehr als eine Betriebsposition verfügen, bspw. in Abhängigkeit vom Gewicht oder Alter und insbesondere Grösse des Kindes, von der Körpergrösse der Person, die den Kinderwagen schiebt, von der Umgebung, in welcher der Kinderwagen benutzt wird, etc.

Unter einer Lagerposition wird hier und im Folgenden diejenige Position des Kinderwagens verstanden, in welcher er bei Nichtbenutzung unter Verringerung des Raumbedarfs gegenüber der Betriebsposition bringbar ist.

Es hat sich gezeigt, dass bekannte zusammenklappbare Kinderwagen vor allem durch die kurze Rückenlehne als nachteilig empfunden werden. Andere Aspekte haben sich überraschend als untergeordnet herausgestellt. Die Länge der Rückenlehne ist jedoch bei bekannten zusammenklappbaren Kinderwagen durch die Aussenlänge in der Lagerposition begrenzt. Die Norm EN 1888/2005 (Transportmittel für Kinder auf Rädern) schreibt vor, dass die Länge der Rückenlehne mindestens 38 cm betragen muss; eine grössere Länge kann selbstverständlich je nach Körpergrösse des Kindes erwünscht sein. Eine Aussenlänge von > 38 cm in der Lagerposition ist jedoch nicht wünschenswert, da dies bereits als umständlich beim Transport empfunden wird.

Die vorliegende Erfindung überwindet dieses Problem auf einfache und elegante Art und Weise durch eine selektive Verlängerung der Rückenlehne nur in der Betriebsposition. Hierdurch kann nach wie vor eine sehr kompakte Lagerposition erzielt werden.

In besonders bevorzugten Ausführungsformen weist der Kinderwagen in der Lagerposition die Form eines Handgepäckstücks, insbesondere eines Koffers, vorzugsweise eines Hartschalenkoffers auf. Vorzugsweise bilden die beiden Hauptflächen der Aussenseiten des Handgepäckstücks in der Lagerposition die Sitzfläche und die Rückenlehne in der Betriebsposition, insbesondere durch Umklappen der beiden Hauptflächen entlang einer gemeinsamen Kante um einen Winkel von > 180°. Unter einem Handgepäckstück werden vorliegend insbesondere Gepäckstücke nach der Definition der IATA (International Air Transport Association) verstanden, also Gepäckstücke mit einer Ausdehnung von maximal 55 x 40 x 20 cm. Vorzugsweise weist der Kinderwagen ein Gewicht von weniger als 12 kg, bevorzugt von weniger als 10 kg, besonders bevorzugt von weniger als 8 kg auf. Bei Erfüllung dieser Randbedingungen an Grösse (in der Lagerposition) und Gewicht wird eine in der Praxis noch als akzeptabel empfundene Ausgestaltung angenommen, wobei eine Unterbietung der genannten Limite an Gewicht und Grösse selbstverständlich bevorzugt ist.

Die Rückenlehne kann in mindestens einer der Betriebspositionen im Vergleich zur Lagerposition verlängert sein durch Anbringung, insbesondere Herausklappen, und/oder Herausziehen und/oder Anstecken eines Ergänzungsstücks. Das Ergänzungsstück verlängert die Rückenlehne also in der Betriebsposition, wohingegen in der Lagerposition die Abmessungen nicht durch die verlängerte Rückenlehne vergrössert sind.

In weiteren besonders bevorzugten Ausführungsformen ist das Ergänzungsstück in der Lagerposition im Wesentlichen aufgerollt, insbesondere verborgen in dem Handgepäckstück. Die Rückenlehne ist hierbei durch Herausziehen des Ergänzungsstücks verlängerbar, unter Erreichung einer Betriebsposition. Vorzugsweise ist das Ergänzungsstück in der Lagerposition zumindest teilweise auf einem Träger aufgerollt. Auf den Träger können Federmittel wirken, welche eine entgegen der Abrollrichtung gerichtete Kraft ausüben.

Das in der Lagerposition aufgerollte Ergänzungsstück kann hierbei im Wesentlichen wie bekannte Rollos ausgestaltet sein: bspw. als sog. Schnapprollo, wobei eine Federspannung das Ergänzungsstück aufwickelt, wenn man es sofort loslässt. Will man, dass das Ergänzungsstück ausgezogen arretiert bleibt, lässt man es behutsam los. Selbstverständlich kann die Arretierung des Ergänzungsstücks in der Betriebsposition auch anderweitig erfolgen, ergänzend oder alternativ, insbesondere bspw. auch mit Klettverschlüssen, Haken/Ösen, magnetisch, oder dergleichen mehr.

In weiteren besonders bevorzugten Ausführungsformen ist das Ergänzungsstück in mindestens einer Betriebsposition fixierbar durch mechanisch im wesentlichen komplementäre Elemente an dem Ergänzungsstück und dem Rahmen des Kinderwagens, insbesondere dem Stossbügel und/oder den vorzugsweise teleskopartig ausziehbaren Stützstangen des Stossbügels. Bei den mechanisch komplementären Elementen kann es sich bspw. am Ergänzungsstück um wenigstens einen Nocken handeln, welcher zur Fixierung des Ergänzungsstücks in einer Betriebsposition in Eingriff mit einer Nut bringbar ist. Durch mechanisch im wesentlichen komplementäre, vorzugsweise ineinander greifende Elemente kann auf besonders einfache und zuverlässige Art und Weise eine Arretierung des Ergänzungsstücks in einer Betriebsposition erreicht werden.

In weiteren Ausführungsformen befindet sich das Ergänzungsstück in der Lagerposition auf der Aussenseite des Handgepäckstücks. So kann das Ergänzungsstück bspw. gemeinsam mit einer Aussenseite des Handgepäckstücks eine Tasche bilden, welche in der Lagerposition des Kinderwagens für die Lagerung von Utensilien nutzbar ist.

Selbstverständlich kann das Ergänzungsstück in der Lagerposition auch im Wesentlichen flächig in das Handgepäckstück eingeschoben und/oder hereingeklappt sein. Mit einer solchen Ausführungsform können, falls dies für bestimmte Alters-, Gewichts- und Grössengruppen von Kindern und/oder Kinderwagen für besondere Beanspruchungen ("Outdoor-Kinderwagen", "Jogging-Kinderwagen") gewünscht ist, wesentlich steifere Ergänzungsstücke realisiert werden, als dies mit aufgerollten Ergänzungsstücken möglich ist.

Vorzugsweise umfasst das Ergänzungsstück ein Netzmaterial. Das Ergänzungsstück kann auch im Wesentlichen vollständig aus einem Netzmaterial bestehen. Netzmaterialien sind insbesondere aus Gewichtsgründen, aber auch aus ästhetischen Gründen bevorzugt. Jedoch können bei Verwendung von Netzmaterialien Versteifungselemente im oder am Ergänzungsstück notwendig sein, insbesondere in Form von Stangen, welche bspw. in Endbereichen vorgesehen sein können, insbesondere als Arretierungsmittel und/oder als Auszugsbremse.

Der Kinderwagen kann weiter bevorzugt wenigstens ein Kissen aufweisen, welches insbesondere lösbar mit der Rückenlehne und/oder dem Ergänzungsstück verbindbar oder verbunden ist. Das Kissen kann hierbei insbesondere angenäht, angeknöpft, mit einem Klettverschluss angebracht oder mit Druckknöpfen befestigt sein. Besonders bevorzugt weist der Kinderwagen eine Tasche auf, welche das Kissen in der Lagerposition aufnimmt; vorzugsweise befindet sich diese Tasche in der Lagerposition im Innern verborgen. Selbstverständlich ist es auch möglich, das Kissen bpsw. aufblasbar auszugestalten, um den Raumbedarf in der Lagerposition weiter zu verringern.

In besonders bevorzugten Ausführungsformen kann der Kinderwagen über ein passives Rückhaltesystem verfügen, insbesondere einen oder mehrere Sicherheitsgurte wie z.B. Becken- und/oder Brustgurte. Besonders vorteilhaft ist ein oder mehrere der Sicherheitsgurte in der Lagerposition als Tragegurt, insbesondere als Schultertragegurt, nutzbar. Auch eine Nutzung der Sicherheitsgurte als Gurte eines Rückentragesystems ist möglich.

Weiter vorzugsweise verfügt der Kinderwagen in der Lagerposition über einen Tragegriff, welcher teleskopartig ausziehbar und in der Betriebsposition als Stossbügel nutzbar ist.

Am Kinderwagen können übliche Bremssysteme vorgesehen sein, wie sie im Stand der Technik bekannt sind, wie z.B. Fuss-Bremssysteme, welche auf die dem Stossbügel zugewandten Räder wirken, oder auch Hand-Bremssysteme, welche am Stossbügel selbst bedient werden können. Hierdurch kann auch die aktive Sicherheit des Kinderwagens weiter verbessert werden.

Weiter verfügt der Kinderwagen bevorzugt über Seitenwangen, welche die Sitzfläche seitlich begrenzen und ein seitliches Herunterrutschen des Kindes von der Sitzfläche verhindern.

Eine Fussraste kann ebenso vorgesehen sein, welche vorzugsweise über einen Klapp- oder auch Schiebemechanismus von einer (typischerweise im Innern verborgenen) Lagerposition in eine Betriebsposition überführbar ist. Alternativ ist auch eine lösbar mit dem Kinderwagen verbundene/verbindbare Fussraste möglich, welche demontiert werden und in der Lagerposition im Innern gelagert werden kann.

Die Erfindung betrifft weiter ein Verfahren zur Inbetriebnahme eines zusammenklappbaren Kinderwagens mit mindestens einer Rückenlehne, insbesondere eines Kinderwagens wie vorstehend beschrieben, wobei die Rückenlehne gegenüber der Lagerposition verlängert wird, insbesondere durch Herausklappen, und/oder Herausziehen und/oder Anstecken eines vorstehend beschriebenen Ergänzungsstücks.

In einem weiteren Aspekt betrifft die Erfindung die Verwendung eines insbesondere herausklappbaren, und/oder herausziehbaren und/oder ansteckbaren Ergänzungsstücks zur Verlängerung der Rückenlehne eines Kinderwagens insbesondere wie vorstehend beschrieben.

Die Erfindung wird nachfolgend anhand eines bevorzugten Ausführungsbeispiels und anhand von Figuren beschrieben, ohne dass der Gegenstand der Erfindung auf diese Ausführungsform zu beschränken ist. Es zeigen:
- Fig. 1a, 1b:: perspektivische Ansicht des Kinderwagens in einer Betriebsposition;
- Fig. 2:: schematische Darstellung des Überführens von der Lagerposition in eine Betriebsposition;
- Fig. 3a, 3b:: ausschnittsansichten eines aufgerollten Ergänzungsstücks;
- Fig. 4a:: in einer Betriebsposition arretiertes Ergänzungsstück;
- Fig. 4b:: optionales Kissen auf dem Ergänzungsstück;
- Fig. 5a:: Frontalansicht in der Lagerposition;
- Fig. 5b-5d:: Draufsicht, Seitenansicht und Frontansicht in einem Betriebszustand.

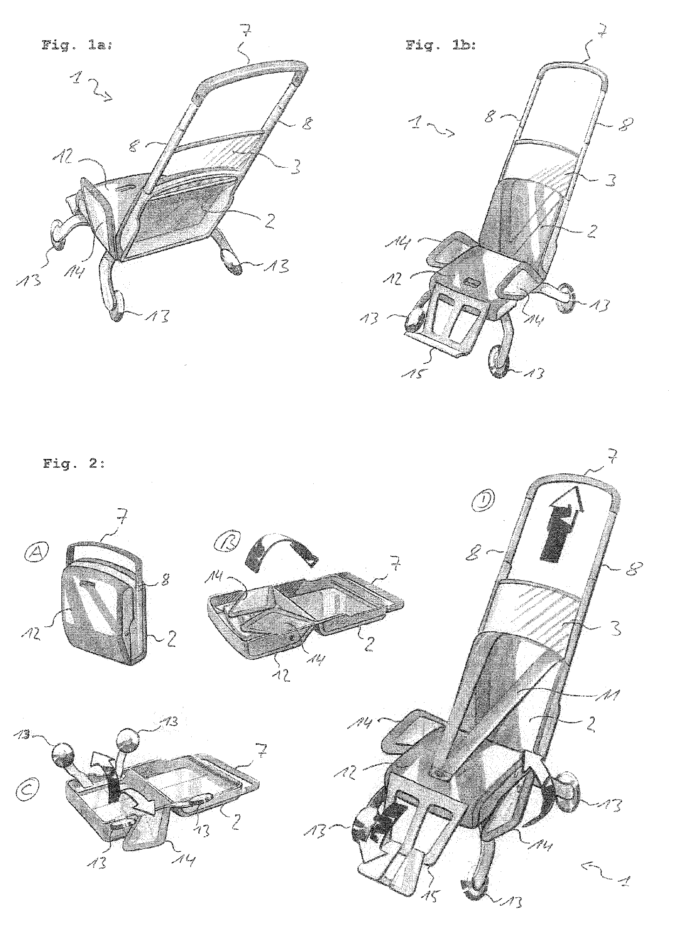

Fig. 1a und 1b zeigen einen Kinderwagen 1 gemäss der Erfindung in einer Ansicht von schräg hinten (Fig. 1a) sowie von schräg vorne (Fig. 1b), jeweils in einer Betriebsposition. Der Kinderwagen 1 verfügt über eine Sitzfläche 12 und eine Rückenlehne 2, sowie Seitenwangen 14, welche seitlich an der Sitzfläche 12 angeordnet sind. Der Kinderwagen 1 verfügt über Rad/Radschenkel-Kombinationen 13. Der Kinderwagen 1 kann in ansonsten bekannter Art und Weise sowohl dreirädrig (nicht im Detail gezeigt) als auch vierrädrig ausgestaltet sein. In Fig. 1b ist darüber hinaus eine Fussraste 15 gezeigt, welche als separates Bauteil verbindbar mit dem Kinderwagen 1 ausgestaltet sein kann, oder aber auch ausklappbar. Der Kinderwagen 1 verfügt weiter über ein Ergänzungsstück 3, welches zur Verlängerung der Rückenlehne 2 in der Betriebsposition gegenüber der Lagerposition dient. Das Ergänzungsstück 3 ist in dem Ausführungsbeispiel im Wesentlichen im Zwischenraum zwischen teleskopartig ausziehbaren Stützstangen 8 angeordnet, an deren oberem Ende ein Stossbügel 7 angeordnet ist.

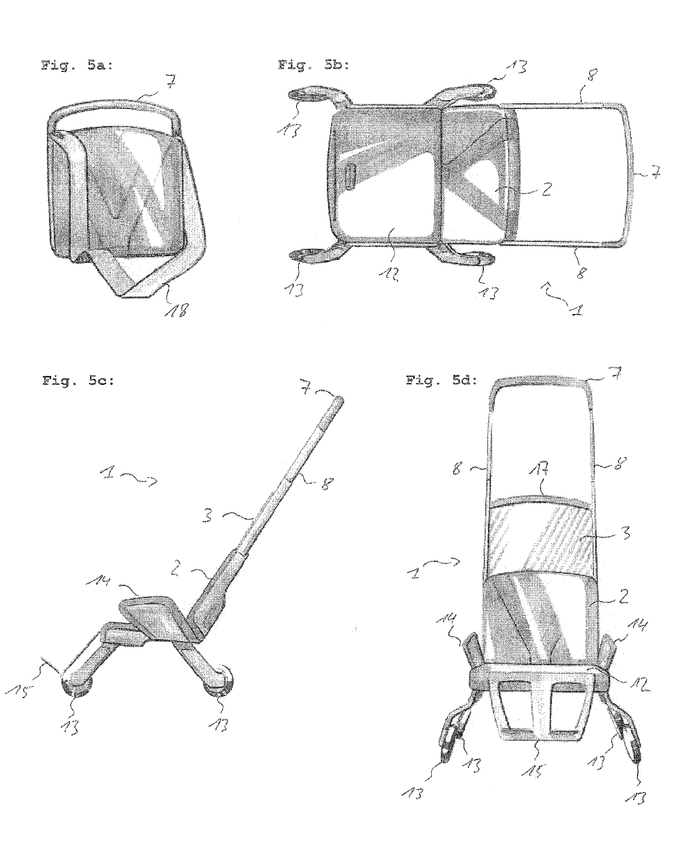

Fig. 2 zeigt schematisch eine Sequenz des Überführens des Kinderwagens 1 von der Lagerposition (A) in eine Betriebsposition (D). In der Lagerposition (A) bildet der Kinderwagen ein handliches Gepäckstück, dessen äussere Hauptflächen im Betriebszustand (D) die Rückenlehne 2 und die Sitzfläche 12 bilden. In der Lagerposition ist ein Tragegriff vorhanden, welcher in der Betriebsposition den Stossbügel 7 bildet. Der Tragegriff bzw. Stossbügel 7 ist über teleskopartig ausziehbare Stützstangen 8 ausziehbar. In Schritten (B) und (C) ist der Übergang von der Lagerposition in die Betriebsposition illustriert. Zunächst wird der Kinderwagen 1 aufgeklappt, in dem Ausführungsbeispiel entlang einer Klappvorrichtung, welche die Sitzfläche 12 mit der Rückenlehne 2 verbindet. Die Sitzfläche 12 und/oder die Rückenlehne 2 weisen hierbei geeignet ausgebildete Abschrägungen auf, welche den maximalen Aufklappwinkel gegenüber der Lagerposition und somit den Winkel zwischen der Sitzfläche 12 und der Rückenlehne 2 in der Betriebsposition (D) bestimmen. Die Seitenwangen 14 sind über Klappmechanismen aus dem Innern hervorklappbar. Anschliessend werden die Rad/Radschenkel-Kombinationen 13 ausgeklappt. Hierbei können jeweils 2 Rad/Radschenkel-Kombinationen an einem gemeinsamen Scharnier vorgesehen sein. Insbesondere können die Rad/Radschenkel-Kombinationen 13, wie in dem Ausführungsbeispiel gezeigt, derart schwenkbar angeordnet sein, dass sie im Betriebszustand einen insbesondere einstellbaren, vorzugsweise negativen Sturz aufweisen, was eine grössere Stand- und Fahrsicherheit ergibt. Ebenso können die Rad/Radschenkel-Kombinationen 13 auch zusätzlich in eine Richtung im Wesentlichen orthogonal zur in Schritt (C) angedeuteten Ausschwenkrichtung schwenkbar sein, also zusätzlich beispielsweise die vorderen Rad/Radschenkel-Kombinationen 13 in Fahrtrichtung, und die hinteren Rad/Radschenkel-Kombinationen 13 entgegen der Fahrtrichtung (besser zu erkennen in Fig. 5b). Hierdurch kann mit einfachen Mitteln die Standsicherheit weiter erhöht werden.

Selbstverständlich können in fachüblicher Art und Weise in den Rad/Radschenkel-Kombinationen 13 bspw. auch Stossdämpfer angeordnet sein (nicht gezeigt). Auch ein zusätzliches Gelenk in dem Schenkel kann vorgesehen werden, um bspw. die Einklappbarkeit und Verstaubarkeit für die Lagerposition zu verbessern. Der verbesserten Verstaubarkeit dient auch die in Fig. 5b und Fig. 5d gut erkennbare Kröpfung des Radschenkels, wodurch sich eine gute Arrangierbarkeit gegenüberliegender Rad/Radschenkel-Kombinationen in der Lagerposition ergibt. In Fig. 2(D) ist weiters eine besonders vorteilhafte Ausgestaltung der Fussraste 15 illustriert: Hierbei kann mittels eines Klappmechanismus eine Stütze herausgeklappt werden, was den Platzbedarf im Lagerzustand verringert gegenüber einer ebenfalls vorstellbaren, vorfixierten Ausgestaltung der im Ausführungsbeispiel 2(D) gezeigten Position der Fussraste 15. Weiter ist in Fig. 2(D) ein passives Rückhaltesystem 11 (hier: ein zwischen den Beinen des Kindes zusammengeführter Oberkörpergurt) gezeigt, welches das Kind in der Betriebsposition des Kinderwagens 1 sicher fixiert.

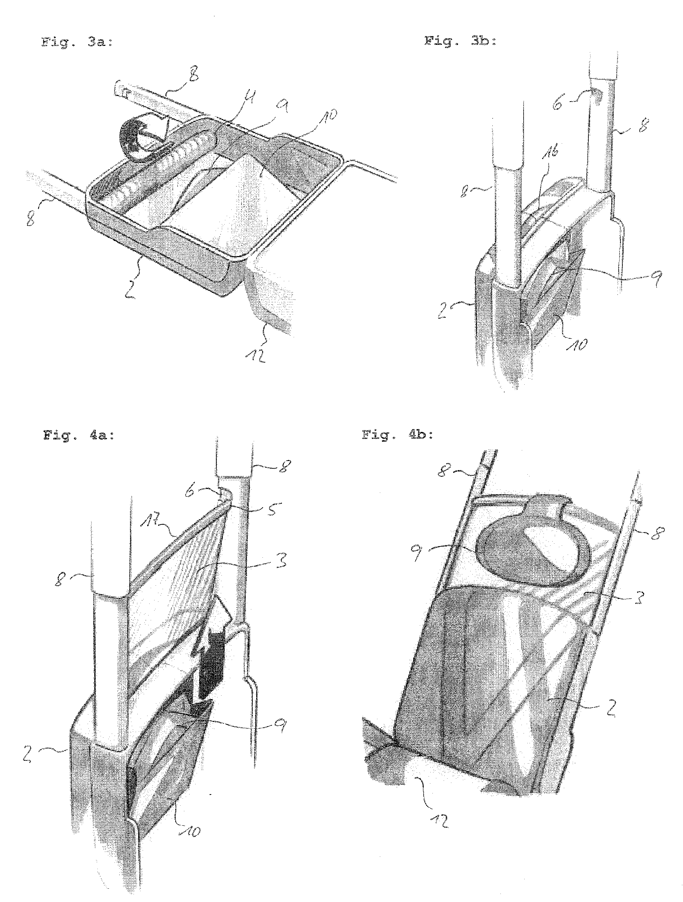

Fig. 3a-3b zeigen spezielle Ausgestaltungen des Ergänzungsstücks 3 in der Lagerposition, Fig. 4a-4b in der Betriebsposition. Das Ergänzungsstück 3 kann im Innern, rückwärtig zur Rückenlehne 2, auf einen Träger aufgerollt sein (Fig. 3a). Mittels einer am oberen Rand der Rückenlehne 2 angeordneten Lasche 16 oder einem anderen Angreifmittel kann das Ergänzungsstück 3 herausgezogen werden (Fig. 3b), vorzugsweise gegen eine entgegen der Abwickelrichtung gerichtete Federkraft. Das Ergänzungsstück 3 ist in dem Ausführungsbeispiel aus einem Netzmaterial gebildet, an dessen oberem Ende sich eine Stange 17 befindet. In den insbesondere teleskopartig ausziehbaren Stützstangen 8 können Nuten 6 eingelassen sein. Die Stange 17 weist eine derartige Länge (oder an Ihren Enden Nocken 5) auf, dass sie in die Nuten 6 eingreifen und das Ergänzungsstück 3 in der Betriebsposition fixieren kann.

Die Auszugsrichtung des Ergänzungsstücks 3 ist in Fig. 4a durch den Pfeil angedeutet. Fig. 4b zeigt ein an dem Ergänzungsstück 3 angeordnetes Kissen 9, welches bspw. mittels Klettverschluss, Knöpfen, Druckknöpfen, etc. lösbar an dem Ergänzungsstück 3 angeordnet sein kann. Auch eine feste Verbindung mit dem Ergänzungsstück 3 ist möglich; so kann das Kissen 9 bspw. an dem oberen Rand des Ergänzungsstücks 3 insbesondere derart angenäht sein, dass die Versenkbarkeit bzw. Einrollbarkeit nicht behindert ist.

Fig. 5a-5d zeigen weitere perspektivische Darstellungen des Kinderwagens 1. In Fig. 5a ist eine Lagerposition gezeigt, in welcher zusätzlich zu Fig. 2(A) noch ein Tragegurt 18 vorgesehen ist. In besonders bevorzugten Ausführungsformen kann ein Gurt des passiven Rückhaltesystems 11 derart angeordnet werden, dass er in der Lagerposition als Tragegurt 18 dienen kann.

## Patentansprüche

1. Kinderwagen (1), welcher einen Mechanismus zum Überführen von mindestens einer Lagerposition in mindestens eine Betriebsposition aufweist, mit einer Rückenlehne (2),
**dadurch gekennzeichnet, dass** die Rückenlehne in mindestens einer der Betriebspositionen im Vergleich zur Lagerposition verlängert ist.

2. Kinderwagen (1) gemäss Anspruch 1,
**dadurch gekennzeichnet, dass** der Kinderwagen (1) in der Lagerposition die Form eines Handgepäckstücks, insbesondere eines Koffers, vorzugsweise eines Hartschalenkoffers aufweist.

3. Kinderwagen (1) gemäss Anspruch 2,
**dadurch gekennzeichnet, dass** die äusseren Hauptflächen des Handgepäckstücks im Betriebszustand die Rückenlehne (2) und eine Sitzfläche (12) des Kinderwagens (1) bilden, insbesondere durch Umklappen der beiden Hauptflächen entlang einer gemeinsamen Kante um einen Winkel von > 180°.

4. Kinderwagen (1) gemäss einem der Ansprüche 1 oder 2,
**dadurch gekennzeichnet, dass** die Rückenlehne (2) in mindestens einer der Betriebspositionen im Vergleich zur Lagerposition verlängert ist durch ein angebrachtes, insbesondere
- heraus geklapptes, und/oder
- heraus gezogenes und/oder
- angestecktes,
Ergänzungsstücks (3).

5. Kinderwagen (1) gemäss Anspruch 4,
**dadurch gekennzeichnet, dass** das Ergänzungsstück (3) in der Lagerposition im Wesentlichen aufgerollt ist, insbesondere verborgen in dem Handgepäckstück, und dass die Rückenlehne (2) durch Herausziehen des Ergänzungsstücks (3) verlängerbar ist.

6. Kinderwagen (1) gemäss Anspruch 5,
**dadurch gekennzeichnet, dass** das Ergänzungsstück (3) in der Lagerposition zumindest teilweise auf einem Träger (4) aufgerollt ist, und dass auf den Träger (4) Federmittel wirken, welche eine entgegen der Abrollrichtung gerichtete Kraft ausüben.

7. Kinderwagen (1) gemäss einem der Ansprüche 5 oder 6,
**dadurch gekennzeichnet, dass** das Ergänzungsstück (3) in mindestens einer Betriebsposition fixierbar ist durch mechanisch im wesentlichen komplementäre Elemente (5,6) an dem Ergänzungsstück (3) und dem Rahmen des Kinderwagens (1), insbesondere dem Stossbügel (7) und/oder den vorzugsweise teleskopartige ausziehbaren Stützstangen (8) des Stossbügels (7).

8. Kinderwagen (1) gemäss Anspruch 7,
**dadurch gekennzeichnet, dass** das Ergänzungsstück (3) wenigstens einen Nocken (5) aufweist, welcher zur Fixierung des Ergänzungsstücks (3) in einer Betriebsposition in Eingriff mit einer Nut (6) bringbar ist.

9. Kinderwagen (1) gemäss einem der Ansprüche 4 bis 8,
**dadurch gekennzeichnet, dass** sich das Ergänzungsstück (3) in der Lagerposition auf der Aussenseite des Handgepäckstücks befindet.

10. Kinderwagen (1) gemäss Anspruch 9,
**dadurch gekennzeichnet, dass** das Ergänzungsstück (3) gemeinsam mit einer Aussenseite des Handgepäckstücks eine Tasche bildet.

11. Kinderwagen (1) gemäss einem der Ansprüche 4 bis 10,
**dadurch gekennzeichnet, dass** das Ergänzungsstück (3) in der Lagerposition im Wesentlichen flächig in das Handgepäckstück eingeschoben und/oder hereingeklappt ist.

12. Kinderwagen (1) gemäss einem der Ansprüche 4 bis 11,
**dadurch gekennzeichnet, dass** das Ergänzungsstück (3) ein Netzmaterial umfasst.

13. Kinderwagen (1) gemäss einem der Ansprüche 1 bis 12,
**dadurch gekennzeichnet, dass** er wenigstens ein Kissen (9) aufweist, welches insbesondere lösbar mit der Rückenlehne (2) und/oder dem Ergänzungsstück (3) verbindbar oder verbunden ist.

14. Kinderwagen (1) gemäss Anspruch 13,
**dadurch gekennzeichnet, dass** der Kinderwagen (1) eine Tasche (10) aufweist, welche das Kissen (9) in der Lagerposition aufnimmt.

15. Kinderwagen (1) gemäss einem der Ansprüche 1 bis 14,
**dadurch gekennzeichnet, dass** der Kinderwagen (1) über ein passives Rückhaltesystem (11) verfügt.

16. Verfahren zur Inbetriebnahme eines zusammenklappbaren Kinderwagens (1) mit mindestens einer Rückenlehne (2), insbesondere eines Kinderwagens (1) gemäss einem der Ansprüche 1 bis 15,
**dadurch gekennzeichnet, dass** die Rückenlehne (2) gegenüber der Lagerposition verlängert wird, insbesondere durch
- Herausklappen, und/oder
- Herausziehen und/oder
- Anstecken
eines Ergänzungsstücks (3).

17. Verwendung eines insbesondere
- herausklappbaren, und/oder
- herausziehbaren und/oder
- ansteckbaren
Ergänzungsstücks (3) zur Verlängerung der Rückenlehne (2) eines Kinderwagens (1) insbesondere gemäss einem der Ansprüche 1 bis 15.
